# EUROPÄISCHE PATENTSCHRIFT

(11) **EP 1 099 960 B1**
(45) Veröffentlichungstag und Bekanntmachung des Hinweises auf die Patenterteilung: **26.03.2003**
(21) Anmeldenummer: 00890329.6
(22) Anmeldetag: 08.11.2000
(51) Int. Cl.: G01S 13/91, G01S 13/86, G01S 13/87, G08G 1/01

(54) **Messverfahren zur Bestimmung und Dokumentation des Abstandes zweier Fahrzeuge**
Measuring procedure for the determination and documentation of the distance between two vehicles
Méthode de mesure de disposition et documentation de la distance entre deux véhicules

(30) Priorität: 12.11.1999 AT 190799
(43) Veröffentlichungstag der Anmeldung: 16.05.2001
(73) Patentinhaber: Sierzega, Robert, 4062 Thening (AT)
(72) Erfinder: Sierzega, Robert, 4062 Thening (AT)

(56) Entgegenhaltungen:
- DE-C- 4 429 064
- FR-A- 2 732 471
- NOBUHIRO SHIMOI ET AL: "APPLICATION OF MILLIMETER-WAVE RADAR TRAFFIC OBSERVATION SYSTEM" ELECTRONICS & COMMUNICATIONS IN JAPAN, PART I - COMMUNICATIONS,US,SCRIPTA TECHNICA. NEW YORK, Bd. 79, PART 1, Nr. 4, 1. April 1996 (1996-04-01), Seiten 24-33, XP000587536 ISSN: 8756-6621

## Beschreibung

Die Erfindung bezieht sich auf ein Meßverfahren zur Bestimmung des Abstandes zweier fahrender Fahrzeuge mit begleitender Videodokumentation. Eine der häufigsten Unfallursachen im Straßenverkehr sind Auffahrunfälle, verursacht durch zu wenig Abstand beim Hintereinanderfahren. Besondere Gefahr droht auf Autobahnen, bei denen sich manche Autofahrer durch knappes Auffahren den Weg freimachen wollen. Daher besteht für die Exekutive der Bedarf den Sicherheitsabstand zu überprüfen, bzw. gegebenenfalls einzugreifen. Als Maß für den Sicherheitsabstand wird allgemein die Zeit herangezogen. Bei gleich hoher Vollbremsverzögerung zweier Fahrzeuge ist geschwindigkeitsunabhängig ein gewisser zeitlicher Mindestsicherheitsabstand einzuhalten, damit ein Fahrzeug bei Vollbremsung des vorausfahrenden Fahrzeuges gerade noch unmittelbar hinter dem vorausfahrendem Fahrzeug zum Stehen gebracht werden kann. Unterschreitet ein Fahrzeug den Mindestsicherheitsabstand an einem Punkt, so liegt noch keine Straftat vor. Der zu niedrige Abstand zum vorausfahrendem Fahrzeug könnte dem Verkehrsteilnehmer aufgezwungen worden sein, wenn zum Beispiel das vorausfahrende Fahrzeug abgebremst hat oder auf einer Autobahn einen Fahrstreifenwechsel zum Fahrstreifen des betroffenen Fahrzeuges vorgenommen hat. Erst wenn über einen gewissen Zeitraum kein Anzeichen zur Erhöhung des Abstandes ersichtlich ist, kann von einer Straftat ausgegangen werden.

Auf Grund der geschilderten Umstände, ist der Beweis für die Straftat, nicht wie bei der Geschwindigkeitsmessung als eine Momentaufnahme an einem Punkt, in Form eines Fotos möglich, sondern muß der Verkehrsteilnehmer via Videoaufzeichnung über einen bestimmten Zeitraum überwacht werden und an mindestens zwei Punkten sein Abstand zum vorausfahrenden Fahrzeug gemessen werden.

Dazu werden bisher im sogenannten Video-Brückenabstandsmeßverfahren ein oder zwei Videokameras verwendet, die, auf Brücken montiert, einen Bereich von zirka 350 Meter überwachen. Zur Abstandmessung wird in das Videobild mittels Charaktergenerator die Zeit einer quarzgesteuerten Uhr eingeblendet und als Bezugspunkte werden Linien auf der Straße in einem definiertem Abstand angebracht. Damit ist das Verfahren keine Abstandsmessung im eichrechtlichen Sinn, sondern ein Abstandsmeßverfahren, bei dem geeichte Geräte zur Verwendung kommen. Dies bedingt sehr hohe Toleranzen und entsprechende Ungenauigkeiten. Außerdem sind die Markierungen für jeden Verkehrsteilnehmer ersichtlich, was zum abrupten Abbremsen vor der Markierung führt. Die Folge ist eine Zunahme an Auffahrunfällen an den Meßstellen, also ein an und für sich kontraproduktives Ergebnis.

FR-A-2732471 offenbart ein Meßverfahren gemäß des Oberbegriffs des Patentanspruchs 1.

In der vorliegenden Erfindung wird zur Messung des zeitlichen Abstandes zwischen zwei Fahrzeugen ein FMCW-Radargerät zur Entfernungsmessung verwendet, das normal auf den Straßenverlauf ausgerichtet ist. Das Radargerät dient zur Detektion eines Fahrzeuges auf dem zu überwachenden Fahrbahnstreifen. Dabei wird eine Hornantenne mit schmaler Öffnung verwendet, damit nur ein kleines Straßenstück für das Radar sichtbar ist. Bei jedem Fahrzeug wird das exakte zeitliche Eintreffen und Verlassen dieser Straßenstelle registriert und damit vom Radargerät die Zeitlücke zwischen den Fahrzeugen exakt gemessen.

Diese Zeitlückenerfassung wäre entsprechend dem Stand der Technik auch mittels Lichtschranken oder Induktionsschleifen (diese werden in die Straße eingebaut und erkennen, ob sich an der entsprechenden Stelle im Moment ein Fahrzeug befindet, oder nicht) möglich. Beim Lichtschranken wäre immer auf der gegenüberliegenden Straßenseite ein Gegenstück notwendig, da aber meist nur mehrspurige Fahrbahnen überwacht werden, ist diese Lösung in der Praxis nicht verwendbar. Mit Induktionsschleifen ist kein exaktes Erfassen von Fahrzeuganfang und -ende möglich, diese werden hauptsächlich für Zählfunktionen verwendet. Daher wäre so ein System ungenau, die Montagekosten hoch und nur eine begrenzte Langlebigkeit durch Witterungseinflüsse und Abnützung der Straße gegeben.

Um bei einem autonomen Betrieb einer Anlage nach dem erfindungsgemäßen Verfahren, ohne notwendigen Eingriff durch einen Menschen, über einen längeren Zeitraum den Abstand der Fahrzeuge erfassen zu können und um nur jene zu speichern, die auch tatsächlich an den Meßstellen den geforderten Mindestabstand unterschreiten, wird in der vorliegenden Erfindung ein Computer als Aufzeichnungseinheit verwendet. Der Computer ist sowohl mit der oder den Videokameras, als auch mit zwei oder mehreren FMCW-Radargeräten verbunden. Die Radargeräte übertragen an den Computer den exakten Zeitpunkt des Eintreffens des Fahrzeuges und den Abstand zum vorausfahrenden Fahrzeug. Der Computer kennt den exakten Abstand zwischen den Meßpunkten, kann also auch die Durchschnittsgeschwindigkeit der Fahrzeuge zwischen den Meßpunkten errechnen. Wird bei jedem FMCW-Radargerät auch eine Videokamera installiert, so kann je nach Wunsch des Betreibers, die Meßstrecke durch Kaskadierung der Einzelsysteme beliebig verlängert werden. Durch den Computer wird über eine gemeinsames Bussystem mit den Radargeräten, eine Zeitsynchronisation durchgeführt.

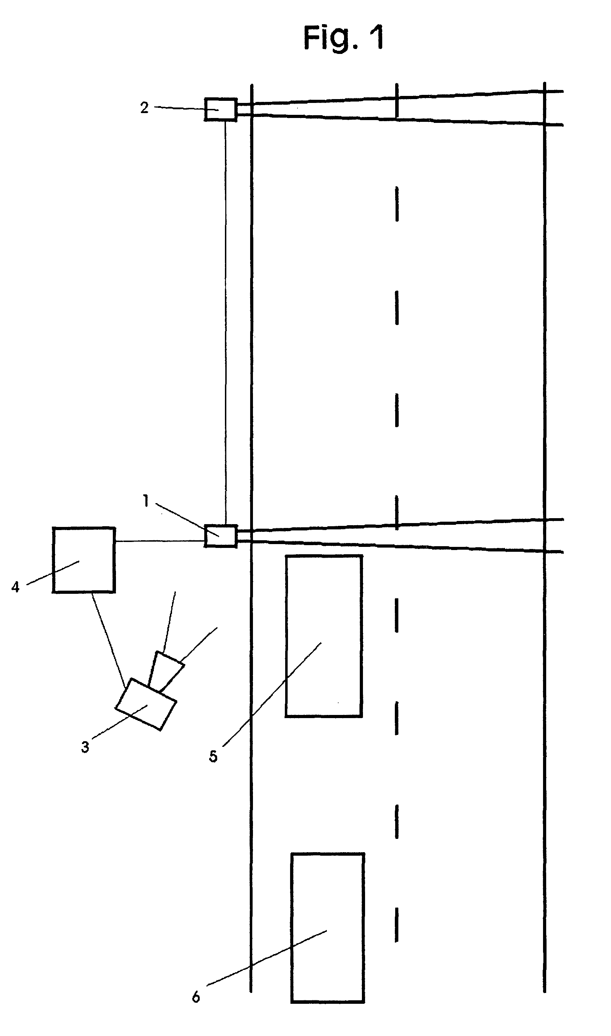

Fig. 1 zeigt die Übersicht über eine einfache Meßanordnung auf einer mehrspurigen Autobahn mit zwei FMCW-Radargeräten 1 und 2, einer Videokamera 3, einem Computer 4 und zwei Fahrzeugen 5 und 6. Fährt nun das Fahrzeug 5 in den Meßbereich des FMCW-Radargerätes 1 ein, so wird der Zeitpunkt gespeichert. Der Zeitpunkt des Verlassens des Meßbereichs wird wieder gespeichert. Sobald das nachfolgende Fahrzeug 6 in den Meßbereich des FMCW-Radargerätes 1 einfährt, wird der Zeitpunkt mit dem Verlassen des Meßbereichs des vorausfahrenden Fahrzeuges 5 verglichen. Der Zeitpunkt des Eintreffens des Fahrzeuges 6 und der zeitliche Abstand zum vorausfahrenden Fahrzeuge 5 wird von FMCW-Radargerät 1 an den Computer 4 übertragen. Unterschreitet der zeitliche Abstand von Fahrzeug 6 zum vorausfahrenden Fahrzeug 5 eine voreingestellte Mindestschwelle, so beginnt der Computer 4 mit der Aufzeichnung der Bilder der Videokamera 3 und blendet den Abstand in das Bild ein. Wird von Fahrzeug 6 die Meßstelle bei FMCW-Radargerät 2 erreicht, so wird noch einmal der zeitliche Abstand zum vorausfahrenden Fahrzeuge 5 errechnet und an den Computer 4 übertragen. Nur wenn an beiden Meßpunkten der geforderte Mindestsicherheitsabstand unterschritten wurde, bleibt die Straftat von Fahrzeug 6 gespeichert. Andernfalls wird die Aufzeichnung gelöscht. Außerdem kann von jedem Fahrzeug die Geschwindigkeit überprüft werden. Sollten diese das erlaubte Limit überschreiten, so kann die Videoaufzeichnung von Computer 4 ebenfalls gespeichert werden.

Wechselt jedoch ein überwachtes Fahrzeug während der Messung die Fahrspur, oder kommt ein zusätzliches Fahrzeug bei FMCW-Radargerät 2 an, so läuft die Erfassung nicht mehr synchron. Ergeben sich bei Computer 4 bei der Berechnung der Geschwindigkeit oder auf Grund der Anzahl der gemeldeten Meßwerte Fehler, so ist die Aufzeichnung zu verwerfen. Die gesamte Erfassung muß dann ab der Meßstelle bei FMCW-Radargerät 1 neu initialisiert werden. Zusätzlich muß bei der Auswertung der Aufzeichnung durch einen Menschen auf derartige Fehler geachtet werden, oder ob zum Beispiel im Überwachungsbereich auf dem Video ein Fahrzeug die überprüfte Fahrspur verlassen hat, aber gleichzeitig ein Fahrzeug von einer anderen Spur auf diese gewechselt hat. In diesem Fall könnte die Abstandsunterschreitung von zwei verschiedenen Fahrzeugen an den Meßpunkten bei den FMCW-Radargeräten 1 und 2 am Video sichtbar sein. Um Probleme dieser Art zu reduzieren, sollte der Abstand zwischen den FMCW-Radargeräten 1 und 2 nicht zu groß sein. Der Mindestabstand kann aus der, für den Nachweis einer Straftat notwendigen, zeitlichen Mindestaufzeichnungslänge bei maximal an dieser Stelle erlaubten Geschwindigkeit errechnet werden.

## Patentansprüche

1. Meßverfahren zur Bestimmung und Dokumentation des Abstandes zweier Fahrzeuge mittels FMCW-Radargeräts, **dadurch gekennzeichnet, daß** zur Messung des zeitlichen Abstandes zweier Fahrzeuge (5, 6) mindestens zwei FMCW-Radargeräte (1, 2) verwendet werden und daß bei gleichzeitiger Dokumentation mittels Videokamera (3) zur Auswertung und Aufzeichnung ein Computer (4) eingesetzt wird.

2. Meßverfahren nach Anspruch 1, **dadurch gekennzeichnet, daß** mit einer Anlage nach dem erfindungsgemäßen Verfahren ein autonomer Betrieb, ohne Eingriff durch einen Menschen, vorgesehen ist.

3. Meßverfahren nach den Ansprüchen 1 oder 2, **dadurch gekennzeichnet, daß** neben dem zeitlichen Abstand auch die Durchschnittsgeschwindigkeit der Fahrzeuge zwischen den Meßpunkten an den FMCW-Radargeräten (1, 2) ermittelt wird.

4. Meßverfahren nach den Ansprüchen 1 bis 3, **dadurch gekennzeichnet, daß** durch Kaskadierung von FMCW-Radargeräten (1,2) mit Videokamera (3), bei gemeinsamer Auswertung und Aufzeichnung über einen Computer (4), die überwachte Strecke verlängert wird.

## Claims

1. Measuring procedure for the determination and documentation of the distance between two vehicles using FMCW radar devices means for measuring the time-distance of two vehicles (5,6) at least two FMCW radar devices (1,2) are being used and for simultanious documentation, using a videocamera (3), for the recording a computer (4) is being used.

2. Measuring procedure according to claim 1, wherein with said measuring procedure an autonomical operation is dedicated, without any access by a person.

3. Measuring procedure according to claim 1 or 2 , wherein beside the time-distance also the average velocity of the vehicles between the points of measurement at the FMCW radar devices (1,2) is being determined.

4. Measuring procedure according to any preceding claim, wherein by cascading of FMCW radar devices (1,2) and a videocamera (3), at simultanious analysis and recording by a computer (4), the investigated distance is being extended.

## Revendications

1. Méthode de mesure de disposition et documentation de la distance entre deux véhicules par FMCW-radar, **caractérisé en ce qu'**on utilise au moins deux FMCW-radars (1, 2) pour la mesure de la distance temporele de deux véhicules (5, 6) et qu'on utilise en même temps avec une documentation par une caméra vidéo (3), un ordinateur (4) pour l'exploitation et l'annotation.

2. Méthode de mesure selon la revendication 1, **caractérisé en ce qu'**avec une installation par la méthode conforme à l'invention, un fonctionnement autonome sans intervention humaine est prevu.

3. Méthode de mesure selon la revendication 1 ou 2, **caractérisé en ce qu'**on découvre, à côté de la distance temporele aussi la vitesse moyenne des véhicules entre les points de mesure par FMCW-radar (1, 2).

4. Méthode de mesure selon la revendication 1 à 3, **caractérisé en ce qu'**on allonge le trajet observé par la cascader des FMCW-radars (1,2) avec une caméra vidéo (3) et l'exploitation et l'annotation par un ordinateur (4).
